# EUROPÄISCHE PATENTSCHRIFT

(11) **EP 1 399 358 B1**
(45) Veröffentlichungstag und Bekanntmachung des Hinweises auf die Patenterteilung: **14.02.2018**
(21) Anmeldenummer: 02762284.4
(22) Anmeldetag: 13.06.2002
(51) Int. Cl.: B62K 25/04, B62K 19/16, B62K 25/30

(54) **FAHRRADRAHMEN**
BICYCLE FRAME
CADRE DE BICYCLETTE

(30) Priorität: 13.06.2001 DE 10128676
(43) Veröffentlichungstag der Anmeldung: 24.03.2004
(73) Patentinhaber: Storck Bicycle GmbH, 65520 Bad Camberg (DE)
(72) Erfinder: STORCK, Markus, 65510 Idstein-Oberrod (DE)
(74) Vertreter: Wallinger, Michael
(86) Internationale Anmeldenummer: PCT/EP2002/006524
(87) Internationale Veröffentlichungsnummer: WO 2002/100709

(56) Entgegenhaltungen:
- EP-A- 0 258 509
- EP-A- 0 669 247
- FR-A- 839 312
- FR-A- 896 511
- US-A- 1 114 855
- US-A- 1 335 765
- US-A- 2 157 971
- US-A- 6 109 637
- PATENT ABSTRACTS OF JAPAN vol. 1999, no. 03, 31. März 1999 (1999-03-31) -& JP 10 316076 A (NUMATA YUKIO), 2. Dezember 1998 (1998-12-02)

## Beschreibung

Die Erfindung betrifft eine Fahrradgabel, einen Fahrradrahmen sowie ein Verfahren zur Herstellung eines Fahrradrahmens.

Fahrradgabeln, Fahrradrahmen sowie Verfahren zur Herstellung von Fahrradrahmen sind bereits bekannt.

Ein bekannter Fahrradrahmen weist einen Grundrahmen mit einem Steuerrohr auf, in welches eine Fahrradgabel eingeführt, werden kann. Dieser Grundrahmen weist ferner ein Sitzrohr auf, in welchem ein Fahrradsattel aufgenommen werden kann. Am Grundrahmen ist ferner ein Hinterbau angelenkt, der Kettenstreben sowie Sitzstreben aufweist. Dieser Hinterbau ist über ein Gelenk mit dem Grundrahmen verbunden. Ferner stützt sich der Hinterbau am Grundrahmen über ein Feder-Dämpfer-System ab. Dieses Feder-Dämpfer-System weist einen Dämpfer auf, sowie eine Feder. In einer Variation dieser Gestaltung ist die Feder als Schraubenfeder gestaltet. In einer alternativen Gestaltung ist die Feder als Luftfeder gestaltet.

Die EP 0 669 247 beschreibt eine Federung für ein Hinterrad eines Zweirades mit einem Paar gebogener, elastischer Federungsstreben sowie einem Paar Kettenstreben. Je eine Federungsstrebe und eine Kettenstrebe sind miteinander und mit dem Rahmen drehbar verbunden.

Die US 6,109,637 offenbart einen Fahrradrahmen gemäß dem Oberbegriff von Anspruch 1, an dessen Sitzrohr eine Kettenstrebe und eine Sitzstrebe angebracht sind. Die Kettenstrebe und die Sitzstrebe sind im Bereich des Ausfallendes drehbar miteinander verbunden. Die Sitzstrebe ist benachbart zum unteren Ende bogenförmig ausgestaltet. Ein Element, welches die Dämpf- oder Federrate erhöhen kann, ist im bogenförmigen Bereich an der Sitzstrebe angeordnet.

Der Erfindung liegt die Aufgabe zugrunde, eine Fahrradgabel, einen Fahrradrahmen sowie ein Verfahren zur Herstellung eines Fahrradrahmens zu schaffen, die bzw. der insofern anders gestaltet ist, als er sich durch zumindest ein Merkmal von den bekannten Fahrradrahmen bzw. den bekannten Fahrradgabeln bzw. den bekannten Verfahren zur Herstellung eines Fahrradrahmens unterscheidet.

Die Aufgabe wird durch einen Fahrradrahmen gemäß Anspruch 1 gelöst.

Der Aufnahmebereich bzw. die Radaufnahme ist insbesondere ein Ausfallende.

Es sei angemerkt, daß ein federgelagerter Aufnahmebereich insbesondere auch so zu verstehen ist, daß ein an dem Fahrradrahmen montiertes Rad federnd gelagert wird. Allerdings gehört ein derartiges Rad nicht zwangsläufig zu einem Fahrradrahmen, so daß der Einfachheit halber im Rahmen dieser Offenbarung allgemein von der Lagerung des Aufnahmebereichs bzw. der Radaufnahme gesprochen wird.

Der Grundrahmen weist, sofern dieser gemäß einem klassischen Fahrradrahmen gestaltet ist, ein Steuerrohr, ein Unterrohr, ein Sitzrohr, gegebenenfalls ein Tretlagergehäuse, und gegebenenfalls ein Oberrohr auf.

Es sei allerdings angemerkt, daß der Begriff "Grundrahmen" im Sinne der vorliegenden Erfindung nicht auf die vorerwähnte Gestaltung beschränkt sein soll. Moderne Rahmen sind häufig so gestaltet, daß die klassischen genannten Begriffe der Rahmenrohre bzw. Rahmenteile eines solchen Grundrahmens nicht immer eindeutig anwendbar sind. Die Erfindung soll sich auf Fahrradrahmen mit solchen Grundrahmen erstrecken.

Die am Grundrahmen angeordnete Einrichtung ist vorzugsweise ein Fahrradhinterbau oder eine Fahrradgabel. Ein Fahrradhinterbau weist, im klassischen Sinne, insbesondere eine Sitzstrebe und eine Kettenstrebe auf.

Die Erfindung soll allerdings nicht auf Hinterbauten mit einer Sitzstrebe und einer Kettenstrebe beschränkt sein. Beispielsweise kann der Hinterbau auch so gestaltet sein, daß er keine Sitzstrebe aufweist. Bei klassischen Fahrrädern verbindet die Kettenstrebe die Radaufnahme bzw. das Ausfallende mit dem Tretlager und die Sitzstrebe die Radaufnahme bzw. das Ausfallende mit dem Sitzrohr. Die Erfindung soll allerdings nicht auf derartige Gestaltungen beschränkt sein. Es ist beispielsweise auch bevorzugt, daß die "Sitzstrebe" die Radaufnahme bzw. das Ausfallende mit einem Unterrohr verbindet. Wie erwähnt, kann auch eine Sitzstrebe völlig fehlen. Eine Vielzahl weiterer Gestaltungen eines derartigen Hinterbaus sind bevorzugt.

Die Einrichtung bzw. der Hinterbau oder die Fahrradgabel ist erfindungsgemäß als Strebenkonstruktion gestaltet.

Eine Strebenkonstruktion ist im Sinne der vorliegenden Erfindung eine Anordnung, die mehrere Streben aufweist. Derartige Streben können rohrförmig oder aus Vollmaterial gestaltet sein und unterschiedlichste Querschnitte aufweisen, wie beispielsweise rechteckige Querschnitte oder runde Querschnitte oder ellipsenförmige Querschnitte. Diese beispielhaft genannten Querschnittsformen sollen die Erfindung allerdings nicht beschränken. Es kommt vielmehr eine Vielzahl weiterer Querschnittsformen in Betracht. Innerhalb des Fahrradrahmens können unterschiedliche Streben auch unterschiedliche Querschnitte aufweisen. Gemäß der Erfindung sind die elastisch gestalteten Streben so gestaltet, insbesondere hinsichtlich der Querschnittsfläche, daß der Biegewiderstand um eine Achse, die senkrecht zur Fahrradebene angeordnet ist, deutlich geringer ist, als um eine Achse, die im wesentlichen in der Fahrradebene liegt. Gegebenenfalls sind diese Streben hinsichtlich einer Biegung um eine in der bzw. parallel zur Fahrradebene angeordnete Biegeachse im wesentlichen starr. Bevorzugt ist auch, daß die elastischen Streben bzgl. einer derartigen Biegeachse nicht starr sind und durch sonstige Maßnahmen, wie Vorsehen von stabilisierenden Einrichtungen oder dergleichen, eine Biegung der elastischen Streben um diese Achse im wesentlichen verhindert wird.

Die elastisch gestalteten Streben sind besonders bevorzugt plattenartig gestaltet, wobei das breitere Querschnittsmaß im wesentlichen senkrecht zur Fahrradebene angeordnet ist. In bevorzugter Gestaltung weist der Hinterbau wenigstens eine Kettenstrebe und wenigstens eine Sitzstrebe auf, sowohl die Sitzstrebe als auch die Kettenstrebe sind elastisch gestaltet.

Vorzugsweise wirkt wenigstens eine, besonders bevorzugt alle, der elastisch gestalteten Streben als eine Art Feder mittels welcher eine Radaufnahme, wie Vorderradaufnahme oder Hinterradaufnahme bzw. an diesen montierte Räder, federnd gelagert sind. Gemäß der Erfindung weist die Einrichtung, als< insbesondere der Hinterbau oder die Fahrradgabel eines Fahrrades, zwei elastisch gestaltete Streben auf, die parallel geschaltet sind und auf der gleichen Seite der Radebene angeordnet sind.

Es sei angemerkt, daß unter parallel geschaltet auch, allerdings nicht nur, zu verstehen ist, daß diese Streben parallel zueinander angeordnet sind. Insbesondere ist unter parallel geschaltet auch zu verstehen, daß diese, insbesondere von der Radaufnahme aus gesehen, nicht in der Reihe angeordnet sind. Der Begriff "parallel geschaltet" kann sich, sofern diese Streben jeweils eine Federwirkung haben, auch auf diese Federn beziehen. Falls jeweils eine Federwirkung gegeben ist, können diese aber auch so angeordnet sein, daß die Federn nicht parallel geschaltet sind. Gemäß der Erfindung sind zwei elastisch gestaltete Streben der Einrichtung, also insbesondere des Hinterbaus oder der Fahrradgabel, auf der gleichen Seite der Radebene angeordnet und parallel zueinander geschaltet. Dies kann beispielsweise im Falle des Hinterbaus, ohne daß die Erfindung hierauf beschränkt werden soll, so sein, daß von der Radaufnahme bzw. dem Ausfallende sich eine Strebe im wesentlichen zu einem Tretlagergehäuse oder in die Nähe des Tretlagergehäuses erstreckt und eine zweite Strebe sich von dem Ausfallende bzw. der Radaufnahme im wesentlichen zum Unterrohr erstreckt.

In bevorzugter Gestaltung sind wenigstens zwei auf der gleichen Seite der Radebene angeordnete, Streben der Einrichtung, also insbesondere des Hinterbaus oder der Fahrradgabel, radial innerhalb und axial außerhalb eines am Fahrradrahmen montierten Rades angeordnet. Im Zustand, in dem ein derartiges Rad nicht montiert ist, ist hiermit selbstverständlich der Bereich gemeint, in dem dieses Rad nach Montage üblicherweise angeordnet ist.

Vorzugsweise ist der Hinterbau einstückig gestaltet.

Besonders bevorzugt ist der Hinterbau einstückig mit dem Grundrahmen verbunden.

Es sei angemerkt, daß im Sinne der Erfindung der Begriff "Strebe" insbesondere als Bestandteil des Rahmens zu verstehen ist, wobei durch diesen Begriff allerdings keine Beschränkung auf die Rahmenteile bewirkt werden soll, die im Fahrradbau üblicherweise als Strebe bezeichnet werden, wie Kettenstrebe oder Sitzstrebe. Im Sinne der Erfindung sind allerdings bekannte Schraubenfedern oder Luftfedern, über welche der Hinterbau gegenüber dem Grundrahmen gefedert ist, nicht als Strebe zu verstehen.

Eine Strebe kann im Sinne der Erfindung rohrartig gestaltet sein oder aus Vollmaterial öder in sonstiger Weise. Besonders bevorzugt ist die elastische Strebe aus Carbonfasern oder aus Fiberglas gefertigt. Bevorzugt ist ferner, daß der übrige Fahrradrahmen aus Carbonfasern oder aus Fiberglas gefertigt ist. Eine bevorzugte erfindungsgemäße Gestaltung kann beispielsweise so sein, daß, beispielsweise aus Carbonfasern oder aus Fiberglas, ein Fahrradrahmen, insbesondere ein Grundrahmen mit Hinterbau, einstückig gefertigt wird, wobei die Federwirkung, welche eine Federung der Hinterradaufnahme bzw. des später montierten Hinterrades ermöglicht, in diesem Rahmen durch seine Gestaltung und Materialauswahl gegeben ist. Es sei allerdings angemerkt, daß die Erfindung hierauf nicht beschränkt sein soll.

Bevorzugt ist ferner, daß insbesondere die elastischen Streben aus anderen Materialien gefertigt sind, wie beispielsweise Aluminium oder Stahl oder dergleichen. Insbesondere bei Stahl ist besonders bevorzugt, daß die elastische Wirkung über die Formgebung bewirkt wird. So kann beispielsweise der Querschnitt einer Stahlstrebe so dimensioniert werden, daß eine geringe Biegesteifigkeit in zumindest einer Dimension gegeben ist, so daß ermöglicht wird, daß das Hinterrad, insbesondere aufgrund dieser Formgebung, ein- und ausfedern kann.

In diesem Zusammenhang sei angemerkt, daß grundsätzlich Stahlrahmen selbstverständlich bekannt sind. Diese bekannten Stahlrahmen sind allerdings so gefertigt, daß die Hinterradaufnahme gegenüber dem verbleibenden Hinterbau, und, bei nicht gefederten Rädern, auch gegenüber dem Grundrahmen fest angeordnet ist. Bei derartigen Gestaltungen wird beispielsweise durch die Querschnittsprofile der Rohre bzw. Streben eine Biegung der Streben möglichst verhindert.

Erfindungsgemäß ist besonders bevorzugt, daß die Streben bzw. Strebenanordnung so elastisch gestaltet ist, daß die Radaufnahme, also insbesondere die Hinterradaufnahme oder die Vorderradaufnahme im Normalbetrieb des Fahrrades bzw. bei den üblicherweise hierbei auftretenden Belastungen, entlang eines Federwegs von mindestens 1 mm, vorzugsweise wenigstens 2 mm, besonders bevorzugt wenigstens 4 mm, vorzugsweise wenigstens 5 mm, bevorzugt wenigstens 7 mm, besonders bevorzugt wenigstens 10 mm, besonders bevorzugt wenigstens 13 mm, besonders bevorzugt wenigstens 15 mm elastisch bewegt werden kann.

In bevorzugter Gestaltung ist wenigstens eine elastisch gestaltete Strebe blattfederartig gestaltet bzw. angeordnet. Besonders bevorzugt ist eine derartige Strebe in Art einer Blattfeder gestaltet, die einseitig fest eingespannt ist, beispielsweise also fest mit einem im wesentlichen starren Grundrahmen verbunden ist, und an einer anderen Stelle, beispielsweise an einem Ende, einen Aufnahmebereich zur Aufnahme eines Rades aufweist.

In bevorzugter Gestaltung sind die elastisch gestalteten Streben so angeordnet, daß beim Ein- und/oder Ausfedern der Radaufnahme bzw. des Rades diese auf Biegung belastet werden, und zwar insbesondere so, daß diese Strebe um eine Achse gebogen wird, die im wesentlichen senkrecht zur Strebe angeordnet ist.

In bevorzugter Gestaltung ist wenigstens eine Einstelleinrichtung zur Einstellung der Federeigenschaften des Fahrradrahmens und/oder zur Einstellung der Dämpfereigenschaften vorgesehen. Unter Feder- bzw. Dämpfeigenschaften ist im Sinne der vorliegenden Erfindung insbesondere ein vorbestimmter Kennwert einer Federeinrichtung bzw. einer Anordnung aus wenigstens einer elastisch gestalteten und als Feder wirkenden Strebe des Rahmens zu verstehen bzw. ein vorbestimmter Kennwert einer Dämpfereinrichtung. Besonders bevorzugt ist ein einstellbarer Kennwert der Feder bzw. Strebe(nanordnung) die Federrate. Bevorzugt ist ferner, daß ein einstellbarer Kennwert der Dämpfereinrichtung die Dämpferrate ist.

Besonders bevorzugt ist vorgesehen, daß die räumliche Lage wenigstens einer elastisch gestalteten Strebe des Fahrradrahmens bzw. die räumliche Lage wenigstens eines Abschnitts einer derartigen Strebe mittels der Einstelleinrichtung verändert werden kann. Beispielsweise, ohne daß die Erfindung hierdurch beschränkt werden soll, ist vorgesehen, daß wenigstens eine Schraube oder dergleichen in eine elastisch gestaltete Strebe eingreift sowie in ein weiteres Bauteil des Rahmens, wie elastisch gestalte Strebe oder starres Bauteil des Rahmens, und daß sich durch Verdrehung dieser Schraube die Vorspannung der einen elastisch gestalteten Strebe bzw. beider elastisch gestalteter Streben verändern läßt.

Die Feder- bzw. Dämpfereigenschaften können stufenlos oder - in alternativer Gestaltung - gestuft verändert werden. Eine stufenlose Verstellung kann - ohne daß die Erfindung hierauf beschränkt werden soll - beispielsweise mittels einer Schraube bewirkt werden. Ein gestufte Verstellung kann - ohne daß die Erfindung hierauf beschränkt werden soll - beispielsweise mittels eines Bauteils bewirkt werden, daß zwischen einer elastisch gestalteten Strebe und einer weiteren, ebenfalls elastisch gestalteten Streben des Rahmens oder einem starren Rahmenbauteil angeordnet ist, wobei die Eingriffsstellen diskret veränderbar sind, so daß ihr Abstand verändert werden kann.

Bevorzugt ist auch, daß wenigstens eine Gegenfeder vorgesehen ist, die wenigstens einer als Feder wirkenden elastischen Strebe des Rahmens entgegenwirkt, oder zumindest in vorbestimmten Lastbereichen entgegenwirkt. In besonders bevorzugter Gestaltung ist vorgesehen, daß die Federkraft dieser Gegenfeder mittels der Einstelleinrichtung eingestellt werden kann. Vorzugsweise ist die Gegenfeder als Strebe gestaltet bzw. ein Rahmenteil des Fahrradrahmens und/oder der Fahrradgabel und/oder des Hinterbaus.

Besonders bevorzugt ist vorgesehen, daß die Einstelleinrichtung von einem Fahrradfahrer während der Fahrt bzw. beim Betrieb des Fahrrades eingestellt werden kann. Beispielsweise - ohne daß die Erfindung hierauf beschränkt werden soll - ist vorgesehen, daß ein Bedienelement der Einstelleinrichtung, wie Drehknopf oder dergleichen im Bereich des sattelzugewandten Endes des Sitzrohres angeordnet ist bzw. so, daß der Fahrradfahrer sie während der Fahrt bedienen kann.

Besonders bevorzugt weist die Einstelleinrichtung ferner eine Arretiereinrichtung auf.

Vorzugsweise sind im Bereich wenigstens einer elastisch gestalteten Strebe elastische Zusatzelemente abnehmbar angeordnet, so daß mittels dieser elastischen Zusatzelemente die Federrate der auf den Radaufnahmebereich wirkenden Feder verändert werden kann. Dies kann beispielsweise so gestaltet sein, daß auf eine elastisch gestaltete Strebe weitere elastisch gestaltete Streben abnehmbar angesetzt werden können. Dies kann insbesondere so sein, daß die elastischen Zusatzelemente so aufgebracht werden, daß blattfederartige Pakete entstehen, die im wesentlichen so oder ähnlich denen gestaltet sind, die in der Automobilindustrie Verwendung finden. In diesem Zusammenhang sei angemerkt, daß diese Blattfederpakete aus Streben unterschiedlicher Länge oder aus Streben gleicher Länge bestehen können. Die Zusatzelemente können verschraubt werden oder auf sonstige Weise mit einer Strebe verbunden werden.

Es sei angemerkt, daß auch wenn ein Hinweis auf Blattfederpakete der Automobilindustrie gegeben wurde, in dieser erfindungsgemäßen Ausführungsform die Blattfederpakete auch insbesondere so gestaltet sein können, daß die Anzahl der blattfederpaketartig zusammengefaßten Streben variiert werden kann. Ferner kann bevorzugt ein derartiges Paket so belastet werden, wie es bereits zuvor erwähnt wurde.

In bevorzugter Gestaltung ist wenigstens ein fixierendes abnehmbares Zusatzelement vorgesehen. Dieses fixierende Zusatzelement kann beispielsweise eine im wesentlichen steife Strebe sein, die zusätzlich montiert und demontiert werden kann. Bei montiertem fixierendem Zusatzelement wird erfindungsgemäß in bevorzugter Gestaltung bewirkt, daß die durch die elastische Streben oder die elastische Strebenanordnung auf eine Radaufnahme bewirkte Federwirkung aufgehoben wird.

Eine derartige Gestaltung ermöglicht beispielsweise ein schnelles Umrüsten von einem gefederten Rad zu einem nicht gefederten Rad. Das fixierende Zusatzelement kann beispielsweise, wenn es die Federwirkung der auf die Hinterradaufnahme wirkende Federwirkung aufheben soll, so angeordnet sein, daß es das Sitzrohr eines Fahrrades oder den Grundrahmen eines Fahrrades mit der Radaufnahme verbindet. Andere Gestaltungen sind allerdings auch bevorzugt.

Das fixierende Zusatzelement kann vollständig abnehmbar gestaltet sein und/oder in nicht montiertem bzw. im nicht wirksamen Zustand teilweise entfernt werden, so daß es mit dem Fahrrad weiterhin verbunden ist, jedoch nicht wirksam ist. Dies kann beispielsweise so erreicht werden, daß eine Verbindung an einer Kopplungsstelle gelöst wird und das fixierende Zusatzelement weggeklappt wird oder eingefahren wird oder auf sonstige Weise die Wirkung als fixierendes bzw. die Federwirkung aufhebendes Element beseitigt wird.

In bevorzugter Gestaltung ist wenigstens eine Dämpfereinrichtung vorgesehen, welche bewirkt, daß die Bewegung der gefedert gelagerten Radaufnahme gedämpft wird. Ein derartiger Dämpfer kann beispielsweise, ohne daß die Erfindung hierauf beschränkt werden soll, zwischen unterschiedlichen elastisch gestalteten Streben angeordnet sein. Die Dämpfereinrichtung kann auch zwischen einer elastisch gestalteten und einer im wesentlichen starr gestalteten Strebe angeordnet sein. Bevorzugt ist auch, daß die Dämpfereinrichtung zwischen einer elastisch gestalteten Strebe und dem Grundrahmen angeordnet ist. Eine Vielzahl weiterer Anordnungsmöglichkeiten für eine derartige Dämpfereinrichtung sind möglich und bevorzugt.

In bevorzugter Gestaltung ist eine Dämpfereinrichtung im Bereich oder innerhalb des Hinterbaus angeordnet oder zwischen dem Hinterbau und dem Grundrahmen.

Bevorzugt ist ferner, daß eine solche Dämpfereinrichtung innerhalb bzw. im Bereich der Vorderradgabel angeordnet ist.

Besonders bevorzugt ist im Bereich der Vorderradgabel bzw. im Bereich des Hinterbaus auf jeder Seite der Radebene jeweils wenigstens eine Dämpfereinrichtung angeordnet.

Vorzugsweise ist ein Dämpfer zumindest teilweise radial innerhalb und axial außerhalb eines am Fahrrad montierten Rades angeordnet.

Bevorzugt ist ferner, daß erfindungsgemäß elastische Streben im wesentlichen spiegelsymmetrisch zur Radebene angeordnet sind.

In bevorzugter Gestaltung ist eine Führungseinrichtung zur Führung der Radaufnahme während des Ein- und/oder Ausfederns vorgesehen. Eine derartige Führungseinrichtung kann insbesondere so gestaltet sein, daß die Radaufnahme beim Ein- und/oder Ausfedern auf einer vorbestimmten Bahn bewegt wird.

Bevorzugt ist ferner, daß mehrere elastisch gestaltete Streben vorgesehen sind, welche, insbesondere in ihrem Zusammenwirken die Bewegungsbahn der Radaufnahme während des Ein- und/oder Ausfederns bestimmen bzw. im wesentlichen definieren.

Unterschiedliche, der gleichen Einrichtung, wie Hinterbau oder Fahrradgabel, zugeordnete elastische Streben können, insbesondere hinsichtlich ihres elastischen Abschnitts, gleich oder unterschiedlich gestaltet und/oder geformt sein und/oder eine gleiche oder unterschiedliche Länge aufweisen.

In einer bevorzugten Gestaltung sind unterschiedliche Streben vorgesehen, die parallelogrammartig angeordnet sind, wobei wenigstens zwei dieser Streben im wesentlichen elastisch gestaltet sind.

Bevorzugt ist ferner, daß die Streben, insbesondere die elastischen Streben, in Längsrichtung gebogen gestaltet sind. Die Streben, insbesondere die elastischen Streben, können allerdings auch gerade oder auf sonstige Weise gestaltet sein.

In einer bevorzugten Gestaltung ist vorgesehen, daß die Radaufnahme zur Aufnahme des Hinterrades beim Ein- und/oder Ausfedern so bewegt wird, daß die Kettenspannung einer Antriebskette durch dieses Ein- und/oder Ausfedern im wesentlichen nicht beeinflußt wird.

Durch bevorzugte erfindungsgemäße Gestaltungen, wie insbesondere der Gestaltung mit Führungseinrichtung zur Führung der Radaufnahme und/oder der bevorzugten Gestaltung, bei welcher Streben im Zusammenwirken die Bewegungsbahn einer Radaufnahme beim Ein- und/oder Ausfedern bestimmen, kann insbesondere bewirkt werden, daß sich die Hinterradachse beim Ein- und/oder Ausfedern im wesentlichen auf einem Abschnitt einer Kreisbahn bewegt, die sich um eine zentrale Achse des Radlagergehäuses erstreckt. Insbesondere bei einer solchen Gestaltung kann erreicht werden, daß die Fahrradkette, insbesondere im oberen, belasteten Teil, während des Ein- und/oder Ausfederns im wesentlichen durch dieses Ein- und/oder Ausfedern bedingt nicht (zusätzlich) be- und entlastet wird bzw. eine ungleichmäßige Kettenbelastung durch das Ein- und Ausfedern bewirkt wird. In diesem Zusammenhang sei allerdings angemerkt, daß diese bevorzugten Ausführungsformen auch so gestaltet werden können, daß dieser Vorteil bzw. diese Wirkung nicht gegeben ist.

In bevorzugter Gestaltung ist die Elastizität der wenigstens einen Strebe so gegeben, daß die Radaufnahme bzw. das Rad des Fahrrades in einer Ebene bewegt werden kann, die im wesentlichen parallel zur Radebene angeordnet ist.

Besonders bevorzugt ist vorgesehen, daß die Radaufnahme senkrecht zur Radebene im wesentlichen nicht-beweglich angeordnet ist. Dies kann beispielsweise durch die Materialgestaltung oder die Querschnittsverhältnisse oder stabilisierende Maßnahmen oder auf sonstige Weise erreicht werden.

Es sei angemerkt, daß sich die Bezeichnung "Radebene" auf jedes einzelne Rad und die diesem zugeordnete Einrichtung, wie Fahrradgabel oder Hinterbau, bezieht. Dies ist insbesondere aus dem Grunde erwähnt, als ein Vorderradaufnahme sich beim Lenken bzw. der Radebene des Hinterrades (auch) senkrecht zu dieser Ebene bewegen würde. Der Bezug soll bezüglich dieser Vorderradaufnahme die Radebene des Vorderrades, und bezüglich der Radaufnahme des Hinterrades die Radebene des Hinterrades sein.

Insbesondere soll durch diese Nicht-Beweglichkeit ein seitliches Ausbrechen verhindert werden. Es sei allerdings angemerkt, daß auf diese Wirkung erfindungsgemäß auch verzichtet werden kann.

Es sei allerdings angemerkt, daß erfindungsgemäß auch bevorzugt ist, daß eine erfindungsgemäße Ausführungsform nur im Bereich des Hinterbaus verwendet wird, während die Fahrradgabel nicht federnd gestaltet ist oder konventionelle Federsysteme aufweist. In entsprechender Weise ist ferner bevorzugt, daß lediglich eine Fahrradgabel erfindungsgemäß gestaltet ist, während der Fahrradhinterbau in konventioneller Weise, entweder gefedert oder ungefedert, gestaltet ist.

Zum Begriff des "Fahrradrahmens" sei noch folgendes angemerkt:
Ein Fahrradrahmen ist im Sinne der vorliegenden Erfindung insbesondere als eine Einheit aus einem Grundrahmen und einem Hinterbau zu verstehen oder als eine Einheit aus Grundrahmen, Hinterbau und daran montierter Gabel.

Die Erfindung soll durch die beispielhaften bevorzugten Gestaltungen nicht beschränkt werden.

Im folgenden werden nun einige Aspekte bevorzugter Gestaltungen der Erfindung anhand der Figuren näher erläutert, ohne daß die Erfindung hierdurch beschränkt werden soll.

Dabei zeigt:
- Fig. 1: eine erste, beispielhafte Ausführungsform der Erfindung in schematischer Darstellung;
- Fig. 2: eine zweite, beispielhafte Ausführungsform der Erfindung in schematischer Darstellung; und
- Fig. 3: eine dritte, beispielhafte Ausführungsform der Erfindung in schematischer Darstellung; und
- Fig. 4: eine dritte, beispielhafte Ausführungsform der Erfindung in schematischer Darstellung.

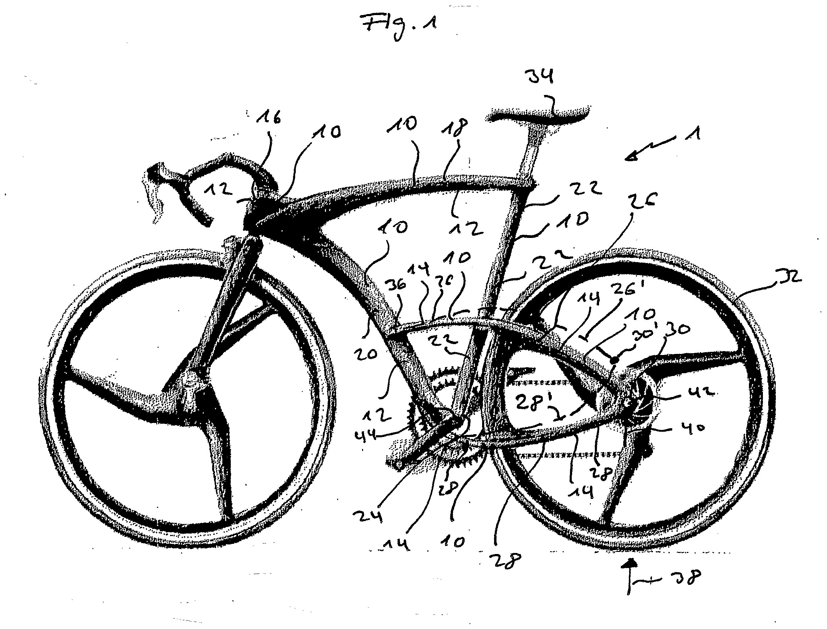

Fig. 1 zeigt ein Fahrrad 1 mit einem erfindungsgemäßen Fahrradrahmen 10.

Der Fahrradrahmen weist einen Grundrahmen 12 auf, sowie einen Hinterbau 14. Der Hinterbau 14 ist eine spezielle Gestaltung der Einrichtung, die in allgemeinerer Form im Rahmen dieser Offenbarung auch als mit dem Grundrahmen verbundene Einrichtung bezeichnet wird.

Der Hinterbau 14 ist - insbesondere in der Gestaltung gemäß Fig. 1 - Bestandteil des Fahrradrahmens 10.

Der Grundrahmen 12 weist in der Gestaltung gemäß Fig. 1 ein Steuerrohr 16, ein Oberrohr 18, ein Unterrohr 20, sowie ein Sitzrohr 22 auf.

Es sei in diesem Zusammenhang angemerkt, daß die Bezeichnungen "Steuerrohr", "Oberrohr", "Unterrohr" und "Sitzrohr" insbesondere in Anlehnung an die im Fahrradbereich üblichen Begriffe gewählt wurden und nicht zwangsläufig bedeuten, daß diese "Rohre" tatsächlich rohrförmig gestaltet sind. Diese "Rohre" können im Sinne der Erfindung jeweils rohrförmig oder nichtrohrförmig gestaltet sein.

In der Gestaltung gemäß Fig. 1 ist der Grundrahmen 14 aus Carbon bzw. Carbonfasern gefertigt, und zwar insbesondere aus kurzfaserigen Carbonfasern oder aus Carbon-Langfasern.

Der Grundrahmen 14 weist ferner ein Tretlagergehäuse 24 auf.

Der Hinterbau 14 weist eine Sitzstrebe 26, eine Kettenstrebe 28 sowie eine Radaufnahme bzw. ein Ausfallende 30 auf.

Das Ausfallende 30 nimmt das Hinterrad 32 des Fahrrades 1 auf.

Die Sitzstrebe 26 erstreckt sich von dem Ausfallende 30 zum Unterrohr 20 und ist nach oben, also in Richtung des Sattels 34, gewölbt. Das von dem Ausfallende 30 zur Aufnahme des Hinterrades 32 abgewandte Ende 36 der Sitzstrebe 26 ist fest bzw. einstückig mit dem Unterrohr 20 verbunden. Die Verbindungsstelle zwischen der Sitzstrebe 26 und dem Unterrohr 20 ist in der Gestaltung gemäß Fig. 1 zwischen den Enden des Unterrohres 20 angeordnet und zwar beispielsweise in etwa der Mitte des Unterrohres 20.

Die Kettenstrebe 28 ist nach unten gewölbt gestaltet, also in vom Sattel 34 abgewandter Richtung.

Die Kettenstrebe 28 verbindet das Ausfallende 30 mit dem Unterrohr 20 bzw. dem Tretlagergehäuse 24 und ist dort fest und einstückig mit dem Grundrahmen 12 verbunden.

Die Sitzstrebe 26 sowie die Kettenstrebe 28 sind jeweils elastisch gestaltet.

Wenn auf das Hinterrad 32, wie durch den Pfeil 38 schematisch angedeutet ist, eine Kraft, insbesondere eine dynamische Kraft, ausgeübt wird, die beispielsweise durch Unebenheiten des Untergrundes oder dergleichen beim Betrieb des Fahrrades 1 bedingt ist, oder beispielsweise durch die Belastung des Fahrrades durch das Gewicht bzw. durch die Gewichtskraft des Fahrers, wird in entsprechender Weise eine Kraft auf das Ausfallende 30 ausgeübt, wie durch den Pfeil 40 schematisch angedeutet ist.

Unter Wirkung dieser Kraft federt die Anordnung aus den elastischen Streben 26, 28 ein, so daß sich das Ausfallende 30 relativ zum Grundrahmen 12 verschiebt. Hierbei verformt und/oder verlagert sich die Sitzstrebe 26 sowie die Kettenstrebe 28. Diese verlagerten Stellungen sind schematisch für die Sitzstrebe 26 durch die gestrichelte Linie 26', für die Kettenstrebe 28 durch die gestrichelte Linie 28', und für das Ausfallende 30 durch den Punkt 30' angedeutet.

Diese Verlagerung bzw. Verformung kann in bevorzugter Gestaltung so sein, daß sich der Bereich des Ausfallendes 30', der die Radachse 42 des Rades 30 aufnimmt bzw. an dem diese Radachse 42 angeordnet ist bzw. diese Radachse 42 entlang eines Abschnitts einer Kreisbahn um die zentrale Achse 44 des Tretlagergehäuses 24 bewegt, wobei der Radius dieser Kreisbahn im wesentlichen dem Abstand zwischen der zentralen Achse 44 des Tretlagergehäuses 24 und der Radachse 42 des Hinterrades 32 entspricht.

Nach entsprechender, insbesondere dynamischer, Entlastung federt die Anordnung aus den elastischen Streben 26, 28 unter Wirkung der entsprechenden Spannung in den Streben 26, 28 wieder aus.

Es sei in diesem Zusammenhang angemerkt, daß auch andere Bewegungsbahnen beim Einfedern bevorzugt und möglich sind.

Es sei angemerkt, daß die beschriebene Gestaltung des Hinterbaus 14, insbesondere spiegelsymmetrisch zur durch das Rad, hier das Hinterrad, aufgespannten Ebene ist.

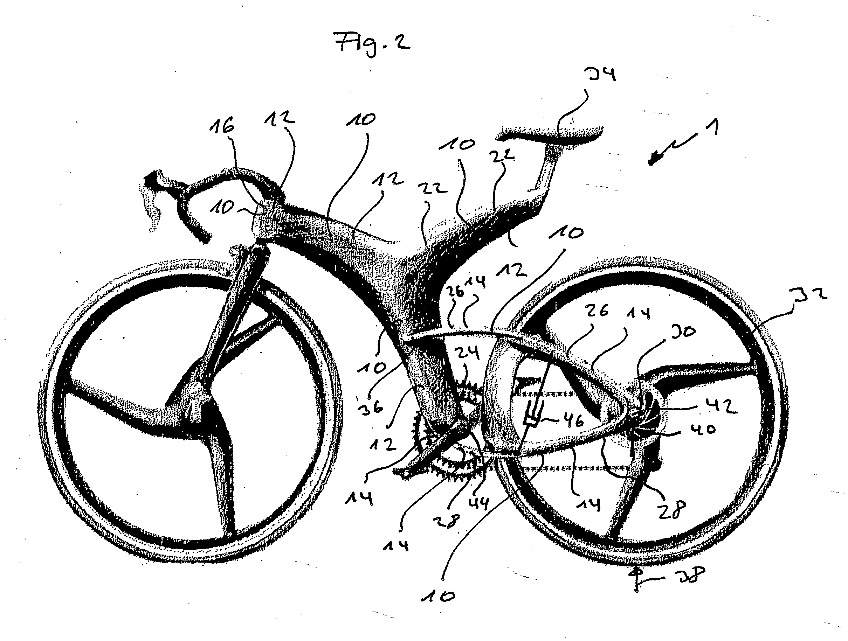

Fig. 2 zeigt eine beispielhafte Gestaltung der Erfindung in schematischer Darstellung.

Die beispielhafte Ausführungsform gemäß Fig. 2 unterscheidet sich von der gemäß Fig. 1 insbesondere in der Gestaltung des Grundrahmens 12, der in Fig. 2 kein Oberrohr 18 aufweist.

Statt dessen erstreckt sich das Sitzrohr 22 zum Unterrohr 20 und ist zwischen-dessen Enden an diesem fixiert.

Die Anordnung aus dem Grundrahmen 12 und dem Hinterbau 14 ist in den Gestaltungen gemäß Fig. 1 und 2 jeweils aus Carbonfasern einstückig gefertigt.

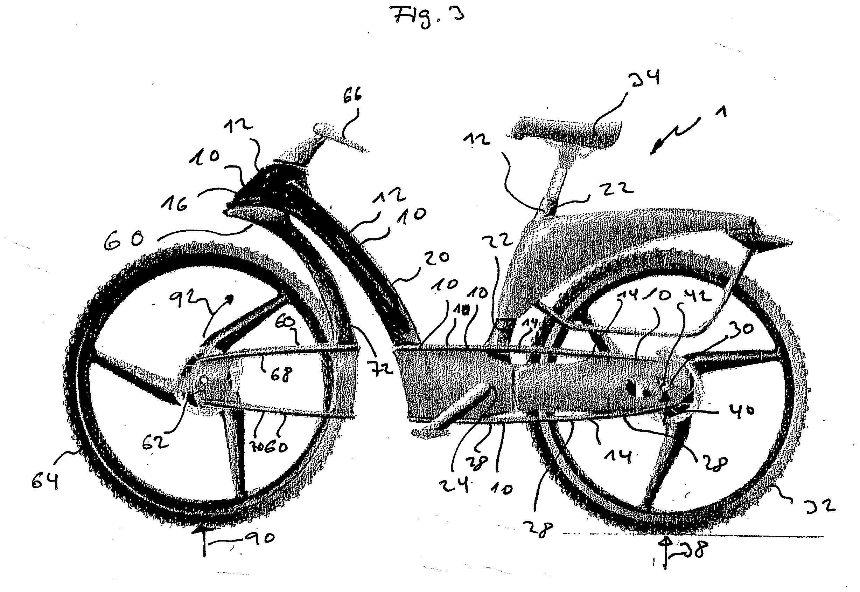

In der Gestaltung ist ferner eine Dämpfereinrichtung 46 schematisch angedeutet, die zwischen den Streben 26, 28 angeordnet und an diesen gelagert ist; derartige Dämpfereinrichtungen 46 können auch in den Gestaltungen gemäß Fig. 1, 3 4 vorgesehen sein; bevorzugt ist allerdings auch, daß derartige Dämpfereinrichtungen 46 nicht gegeben sind.

In den Gestaltungen gemäß Fig. 1 und Fig. 2 ist die Sitzstrebe 26 jeweils parallel zur Kettenstrebe 24 gestaltet.

Die geschlossene Kontur, die durch die Kettenstrebe 28, die Sitzstrebe 26 sowie einen Teil des Unterrohrs 20 definiert wird, ist im wesentlichen augenförmig gestaltet.

In der Gestaltung gemäß Fig. 1 und Fig. 2 sind somit an der Einrichtung bzw. am Hinterbau 14 mehrere elastische Streben 26, 28 jeweils auf der gleichen Seite der Radebene vorgesehen.

Fig. 3 zeigt eine dritte beispielhafte Ausführungsform der Erfindung in schematischer Darstellung.

In der Gestaltung gemäß Fig. 3 weist der Hinterbau 14 zwei elastisch gestaltete Streben 26, 28 auf. Diese Streben, nämlich die Sitzstrebe 26 sowie die Kettenstrebe 28, sind mit dem Ausfallende 30 verbunden. In einem vom Ausfallende 30 beabstandeten bzw. abgewandten Bereich sind diese Streben 26, 28 mit dem Grundrahmen 12 verbunden.

Die Sitzstrebe 26 ist an ihrem dem Ausfallende 30 abgewandten Ende fest mit dem Unterrohr 20 verbunden, und die Kettenstrebe 28 ist ebenfalls an ihrem dem Ausfallende 30 abgewandten Ende mit dem Unterrohr 20 fest verbunden. Ferner kann - dies kann jedoch auch weggelassen sein - die Sitzstrebe 26 im Bereich zwischen ihren Enden fest mit dem Sitzrohr 22 verbunden sein. Gegebenenfalls ist die Kettenstrebe 28 ferner im Bereich des Tretlagergehäuses 24 fest mit diesem Tretlagergehäuse 24 oder mit dem Sitzrohr 22 verbunden.

Die Kettenstrebe 28 ist leicht in sattelabgewandter Richtung gekrümmt, und die Sitzstrebe 26 ist leicht in sattelzugewandter Richtung gekrümmt. Diese Krümmung ist jeweils gering gestaltet, so daß die Streben 26, 28 annähernd parallel zueinander ausgerichtet sind.

Fig. 3 zeigt ferner eine weitere am Grundrahmen 12 angeordnete Einrichtung, die eine Fahrradgabel 60 aufweist.

Die Fahrradgabel 60 gemäß Fig. 3 weist eine Aufnahme bzw. ein Ausfallende 60 zur Aufnahme eines Vorderrades 64 auf, die im wesentlichen starr gestaltet ist. Die Fahrradgabel 60 ist drehbar im Steuerrohr 16 des Grundrahmens 12 gelagert, so daß mittels einer Lenkstange 66 das Vorderrad über die Fahrradgabel 60 gelenkt werden kann. Die Fahrradgabel 60 weist ferner eine erste elastische Strebe 68 sowie eine zweite elastische Strebe 70 auf.

Ferner weist die Fahrradgabel ein schutzblechartig geformtes starres Bauteil 72 auf, das sich vom vorderradzugewandten Ende des Steuerrohrs 16 in Richtung des Grundrahmens 12 gebogen um einen Bereich des Vorderrades 64 erstreckt und gegebenenfalls von der einen Seite der Radebene gekrümmt zur anderen Seite der Radebene verläuft.

Dieses schutzblechförmige Bauteil kann in einer bevorzugten Gestaltung so geformt sein, daß es auch eine Schutzblechfunktion übernimmt. Das schutzblechartige Bauteil 72 ist starr gestaltet und fest mit einem Rohrfortsatz gekoppelt, der sich in das Steuerrohr 16 erstreckt. In einem von diesem Rohrfortsatz abgewandten Bereich ist das Bauteil 72 fest mit den Streben 68, 70 gekoppelt, die an ihrem von diesem Bauteil 72 abgewandten Bereich jeweils fest mit dem Ausfallende 62 verbunden sind.

Im Bereich des Ausfallendes 62 sowie des Bauteils 72 sind die Streben 68, 70 jeweils voneinander beabstandet. Die Streben 68, 70 verlaufen vom Ausfallende 62 zum Bauteil 72 leicht auseinanderlaufend und voneinander weg gekrümmt.

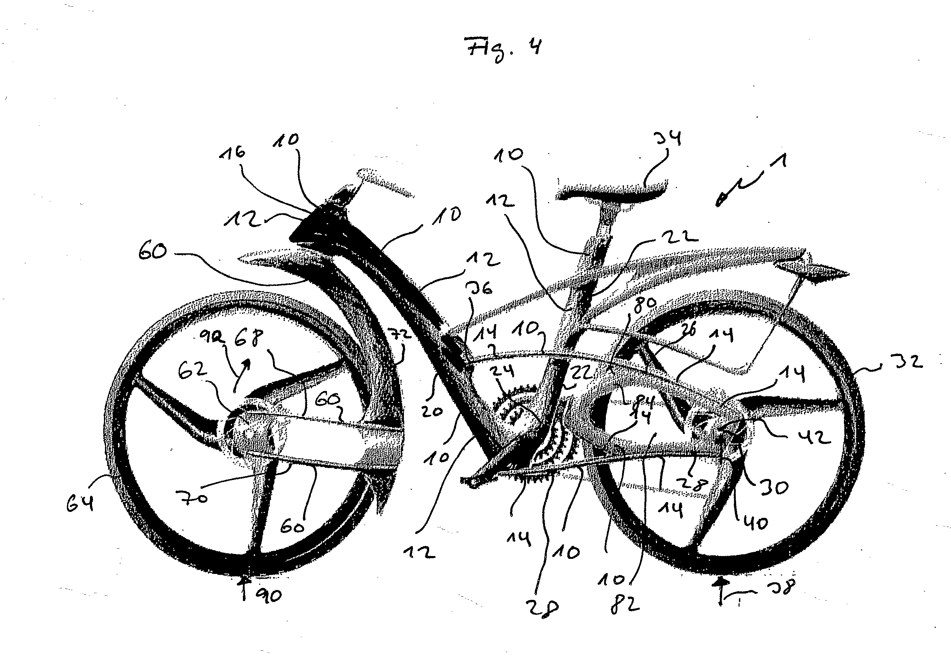

Fig. 4 zeigt eine weitere beispielhafte Gestaltung mit erfindungsgemäßem Fahrradrahmen 10 bzw. erfindungsgemäßer Fahrradgabel 60 in schematischer Darstellung.

In der Gestaltung gemäß Fig. 4 ist eine elastische Sitzstrebe 26 des Hinterbaus 14 vorgesehen sowie eine elastische Kettenstrebe 28 des Hinterbaus 14.

Die elastische Sitzstrebe 26 erstreckt sich vom Ausfallende 30, in Richtung des Sattels 34 gekrümmt, zum Unterrohr 20. Die elastische Kettenstrebe erstreckt sich vom Ausfallende 30 zunächst in Richtung des Sattels gekrümmt und anschließend vom Sattel weg gekrümmt in den Bereich der Tretlageraufnahme und ist dort fixiert. Zwischen den Streben 26, 28 ist ein Bauteil 80 angeordnet, das sich an den Streben 26, 28 sowie am Ausfallende jeweils abstützt und eine Durchgangsöffnung 82 aufweist, die von einer Wandung 84 umgeben ist. An einem Abschnitt dieser Wandung 84 stützt sich die Sitzstrebe 26 ab, und an einem anderen Abschnitt dieser Wandung 84 stützt sich die Kettenstrebe 28 ab. Die Kettenstrebe 28 sowie die Sitzstrebe 26 stützen sich an der Wandung 84 des Bauteils 80 jeweils von außen ab, so daß die Durchgangsöffnung 82 sich im wesentlichen senkrecht zu der durch die Streben 26, 28 aufgespannten Ebene erstreckt und zwischen diesen angeordnet ist.

Fig. 4 zeigt ferner eine als Fahrradgabel 60 gestaltete und mit dem Grundrahmen 12 drehbar verbundene Einrichtung. Diese Fahrradgabel unterscheidet sich von der in Fig. 3 dargestellten Fahrradgabel im wesentlichen dadurch, daß die Streben 68, 70 im wesentlichen parallel angeordnet sind und vom Ausfallende 62 in Richtung des schutzblechartigen Bauteils 72 schräg nach unten geneigt verlaufen; in der Gestaltung gemäß Fig. 3 verläuft die Strebe 68, in dieser Richtung gesehen, schräg nach oben, während die Strebe 70 schräg nach unten verläuft.

Die Gestaltung der Fahrradgabel 60 gemäß Fig. 4 unterscheidet sich von der Fahrradgabel 60 gemäß Fig. 3 ferner insbesondere dadurch, daß das schutzblechartige Bauteil 72, in Fahrtrichtung gesehen, über das Steuerrohr hervorsteht sowie dadurch, daß das andere Ende dieses schutzblechartigen Bauteils nicht in dessen Endbereich mit der Strebe 70 gekoppelt ist (so gemäß Fig. 3), sondern an einer von diesem Endbereich abgewandten Stelle.

Wenn das Vorderrad 64 in der Gestaltung gemäß Fig. 3 bzw. Fig. 4 in Richtung des Pfeils 90 belastet wird, also beispielsweise durch Unebenheiten des Untergrunds oder durch die Gewichtskraft eines Fahrers, eine Kraft auf zwischen Mantelfläche und Untergrund wirkt, federt die Gabel 60, wie durch den Pfeil 92 schematisch angedeutet, ein, wobei sich die Streben 68, 70 elastisch verformen und die Vorderradaufnahme 62 bzw. das Vorderrad relativ zum Grundrahmen in der Radebene des Vorderrades bewegt wird. Nach einer Entlastung federt die Gabel 60 entsprechend wieder aus. Die konkrete Bewegungsbahn hängt von diversen Faktoren ab, wie beispielsweise den Federraten und/oder der Relativanordnung und/oder den Abmaßen der Streben, und kann entsprechend voreingestellt werden.

Es sei angemerkt, daß elastische Streben 68, 70 bevorzugt jeweils auf beiden Seiten der Radebene des Vorderrades 64 angeordnet sind, und zwar insbesondere spiegelsymmetrisch zu dieser Ebene.

Bevorzugt sind ferner elastischen Streben 26, 28 des Hinterbaus 14 jeweils auf beiden Seiten der Radebene des Hinterrades 32 vorgesehen, und zwar insbesondere spiegelsymmetrisch zu dieser Radebene.

Ferner sei angemerkt, die elastischen Streben 26, 28 des Hinterbaus 14 bzw. die elastischen Streben 68, 70 der Fahrradgabel bevorzugt jeweils so angeordnet und gestaltet sind, daß das Hinterrad 32 bzw. das Vorderrad 64 seitenstabil gelagert ist.

**Bezugszeichen**

| | | | |
|---|---|---|---|
| 10 | Fahrradrahmen | 72 | schutzblechförmiges Bauteil |
| 12 | Grundrahmen | 80 | Bauteil |
| 14 | Hinterbau | 82 | Durchgangsöffnung in 80 |
| 16 | Steuerrohr | 84 | Wandung |
| 18 | Oberrohr | 90 | Pfeil |
| 20 | Unterrohr | 92 | Pfeil |
| 22 | Sitzrohr | | |
| 24 | Tretlagergehäuse | | |
| 26 | Sitzstrebe | | |
| 26' | Kettenstrebe | | |
| 28 | Kettenstrebe | | |
| 28' | Kettenstrebe | | |
| 30 | Ausfallende | | |
| 30' | Ausfallende | | |
| 32 | Hinterrad | | |
| 34 | Sattel | | |
| 36 | Ende von 26 | | |
| 38 | Pfeil | | |
| 40 | Pfeil | | |
| 42 | Radachse | | |
| 44 | zentrale Achse von 24 | | |
| 46 | Dämpfereinrichtung | | |
| 60 | Fahrradgabel | | |
| 62 | Ausfallende | | |
| 64 | Vorderrad | | |
| 66 | Lenkstange | | |
| 68 | erste elastische Strebe von 60 | | |
| 70 | zweite elastische Strebe von 60 | | |

## Patentansprüche

1. Fahrradrahmen mit einem Grundrahmen (12), wobei der Grundrahmen (12) wenigstens ein Unterrohr (20) und ein Sitzrohr (22) aufweist, und wenigstens einer an diesem Grundrahmen (12) angeordneten Einrichtung (14, 60), die als Strebenkonstruktion gestaltet ist und einen Aufnahmebereich (30) zur Aufnahme eines Rades (32) aufweist, wobei die Einrichtung (14, 60) zwei elastische und parallel geschaltete Streben (26, 28) aufweist, die auf der gleichen Seite der Radebene angeordnet sind, wobei diese elastisch gestalteten Streben (26,28) so gestaltet sind, dass der Biegewiderstand der elastisch gestalteten Streben (26,28) um eine Achse, die senkrecht zur Fahrradebene angeordnet ist, deutlich geringer ist, als um eine Achse, die im Wesentlichen in der Fahrradebene liegt, so dass der Aufnahmebereich (30) federnd gelagert ist, **dadurch gekennzeichnet, dass** wenigstens ein fixierendes Zusatzelement abnehmbar angeordnet ist, so dass bei montiertem fixierendem Zusatzelement die Radaufnahme (30) im Wesentlichen nicht-federnd gelagert ist, und bei nichtmontiertem fixierendem Zusatzelement die Radaufnahme (30) im Wesentlichen federnd gelagert ist.

2. Fahrradrahmen nach Anspruch 1, **dadurch gekennzeichnet, dass** die Einrichtung (14, 60) ein Fahrrad-Hinterbau (14) ist.

3. Fahrradrahmen nach Anspruch 1, **dadurch gekennzeichnet, dass** die Einrichtung (14, 60) eine Fahrrad-Gabel (60) ist.

4. Fahrradrahmen nach Anspruch 2, **dadurch gekennzeichnet, dass** der Hinterbau (14) wenigstens eine Kettenstrebe (28) und wenigstens eine Sitzstrebe (26) aufweist.

5. Fahrradrahmen nach einem der vorangehenden Ansprüche, **dadurch gekennzeichnet, dass** wenigstens eine elastisch gestaltete Strebe (26, 28) als Feder wirkt, mittels welcher eine Radaufnahmen (30), wie Vorderradaufnahme oder Hinterradaufnahme (30), federnd gelagert ist.

6. Fahrradrahmen nach Anspruch 5, **dadurch gekennzeichnet, dass** die Streben (26, 28) so elastisch gestaltet sind, dass die Radaufnahme (30) im Normalbetrieb des Fahrrades bzw. bei den üblicherweise hierbei auftretenden Belastungen, entlang eines Federwegs von mindestens 1 mm, vorzugsweise wenigstens 2 mm, besonders bevorzugt wenigstens 4 mm, vorzugsweise wenigstens 5 mm, bevorzugt wenigstens 7 mm, besonders bevorzugt wenigstens 10 mm, besonders bevorzugt wenigstens 13 mm, besonders bevorzugt wenigstens 15 mm elastisch bewegt werden kann.

7. Fahrradrahmen nach einem der vorangehenden Ansprüche, **dadurch gekennzeichnet, dass** ein elastisch gestalteter Bereich der elastisch gestalteten Strebe (26, 28) radial innerhalb und axial außerhalb eines am Fahrradrahmen (10) montierten Rades (32) angeordnet ist.

8. Fahrradrahmen nach einem der vorangehenden Ansprüche in Abhängigkeit von Anspruch 2, **dadurch gekennzeichnet, dass** der Hinterbau (14) einstückig gestaltet ist.

9. Fahrradrahmen nach einem der vorangehenden Ansprüche in Abhängigkeit von Anspruch 2, **dadurch gekennzeichnet, dass** der Hinterbau (14) einstückig mit dem Grundrahmen (12) verbunden ist.

10. Fahrradrahmen nach einem der vorangehenden Ansprüche, **dadurch gekennzeichnet, dass** wenigstens eine Einstelleinrichtung zur Einstellung der Federeigenschaften des Fahrradrahmens und/oder zur Einstellung der Dämpfereigenschaften vorgesehen ist.

11. Fahrradrahmen nach Anspruch 10, **dadurch gekennzeichnet, dass** mittels der Einstelleinrichtung die Vorspannung und/oder die räumliche Lage wenigstens einer elastischen Strebe (26, 28) veränderbar ist.

12. Fahrradrahmen nach einem der vorangehenden Ansprüche in Abhängigkeit von Anspruch 5, **dadurch gekennzeichnet, dass** im Bereich wenigstens einer elastisch gestalteten Strebe (26, 28) elastische Zusatzelemente abnehmbar angeordnet, sind, so dass mittels dieser elastischen Zusatzelemente die Federrate der auf den Radaufnahmebereich (30) wirkenden Feder verändert werden kann.

13. Fahrradrahmen nach Anspruch 12, **dadurch gekennzeichnet, dass** die elastischen Zusatzelemente strebenartig gestaltet sind.

14. Fahrradrahmen nach einem der vorangehenden Ansprüche, **dadurch gekennzeichnet, dass** wenigstens eine Dämpfereinrichtung (46) vorgesehen ist, um die Bewegung der gefedert gelagerten Radaufnahme (30) zu dämpfen.

15. Fahrradrahmen nach Anspruch 14, **dadurch gekennzeichnet, dass** die Dämpfereinrichtung (46) in eine Kettenstrebe (28) des Hinterbaus (14) eingreift.

16. Fahrradrahmen nach Anspruch 14 oder 15, **dadurch gekennzeichnet, dass** die Dämpfereinrichtung (46) zwischen einer Kettenstrebe (28) des Hinterbaus (14) und einer Sitzstrebe (26) des Hinterbaus (14) angeordnet ist.

17. Fahrradrahmen nach einem der vorangehenden Ansprüche, **dadurch gekennzeichnet, dass** wenigstens ein Dämpfer (46) zumindest teilweise radial innerhalb und axial außerhalb eines am Fahrradrahmen (10) montierten Rades (32) angeordnet ist.

18. Fahrradrahmen nach einem der vorangehenden Ansprüche, **dadurch gekennzeichnet, dass** eine Führungseinrichtung zur Führung der Radaufnahme (30) während des Ein- und/ oder Ausfederns vorgesehen ist.

19. Fahrradrahmen nach einem der vorangehenden Ansprüche, **dadurch gekennzeichnet, dass** mehrere elastisch gestaltete Streben (26, 28) vorgesehen sind, welche, insbesondere im Zusammenwirken, die Bewegungsbahn der Radaufnahme (30) während des Ein- und/oder Ausfederns bestimmen.

20. Fahrradrahmen nach einem der vorangehenden Ansprüche, **dadurch gekennzeichnet, dass** die Radaufnahme (30) zur Aufnahme des Hinterrades (32) beim Ein- und/oder Ausfedern so bewegt wird, dass die Kettenspannung einer Antriebskette durch dieses Ein- und/oder Ausfedern im Wesentlichen nicht beeinflusst wird.

21. Fahrradrahmen nach einem der vorangehenden Ansprüche, **dadurch gekennzeichnet, dass** die Radaufnahme (30) zur Aufnahme des Hinterrades (32) beim Ein- und/oder Ausfedern bewegt wird, dass die Hinterradachse im Wesentlichen auf einem Abschnitt einer Kreisbahn bewegt, die sich um die Achse eines Tretlagergehäuses (24) des Fahrradrahmens (10) erstreckt.

22. Fahrradrahmen nach einem der vorangehenden Ansprüche, **dadurch gekennzeichnet, dass** die Elastizität im Wesentlichen in einer Ebene wirksam gegeben ist, die parallel zur Radebene angeordnet ist.

23. Fahrradrahmen nach einem der vorangehenden Ansprüche, **dadurch gekennzeichnet, dass** die Radaufnahme (30) senkrecht zur Radebene im Wesentlichen nicht-beweglich angeordnet ist.

24. Fahrradrahmen nach einem der vorangehenden Ansprüche, durch gekennzeichnet, dass die elastische Strebe (26, 28) Carbonfasern und/oder Fiberglas aufweist.

## Claims

1. A bicycle frame comprising a base frame (12), wherein the base frame (12) comprises at least one lower tube (20) and a seat tube (22), and at least one device (14, 60) which is arranged on the base frame (12) and which is configured as a brace structure and which has a receiving area (30) for receiving a wheel (32),
wherein the device (14, 60) comprises two elastically configured and in parallel connected braces (26, 28) which are arranged on the same side of the wheel plane, wherein said elastically configured braces (26, 28) are constructed in such a way that the bending resistance of the elastically configured braces (26, 28) around an axis, which is arranged perpendicular to the plane of the bicycle plane, is significantly less than around an axis, which is essentially in the bicycle plane, so that the receiving area (30) is resiliently mounted,
**characterized in that** at least one additional fastening element is detachably arranged in such a way that the wheel receptacle (30) is mounted in a substantially non-resiliently manner when the fastening element is mounted, and that the wheel receptacle (30) is mounted in a substantially resilient manner when the fastening element is not mounted.

2. The bicycle frame as claimed in claim 1, **characterized in that** the device (14, 60) is a bicycle rear body (14).

3. The bicycle frame as claimed in claim 1, **characterized in that** the device (14, 60) is a bicycle fork (60).

4. The bicycle frame as claimed in claim 2, **characterized in that** the rear body (14) has at least one chain brace (28) and at least one seat brace (26).

5. The bicycle frame as claimed in one of the preceding claims, wherein at least one elastically configured brace (26, 28) acts as a spring, by means of which a wheel receptacle (30) such as a front wheel receptacle or rear wheel receptacle (30) are resiliently mounted.

6. The bicycle frame as claimed in claim 5, **characterized in that** the braces (26, 28) are configured to be elastic in such a way that, during a normal operation of the bicycle and under usually occurring loads, the wheel receptacle (30) can be moved in the direction of the spring at least 1 mm, preferably at least 2 mm, particularly preferably at least 4 mm, particularly preferably at least 5 mm, particularly preferably at least 7 mm, particularly preferably at least 10 mm, particularly preferably at least 13 mm, and particularly preferably at least 15 mm.

7. The bicycle frame as claimed in one of the preceding claims, **characterized in that** an elastically configured region of the elastically configured brace (26, 28) is arranged radially inside and axially outside a wheel (32) mounted on the bicycle frame (10).

8. The bicycle frame according to one of the preceding claims in dependence on claim 2, **characterized in that** the rear body (14) is integrally configured.

9. The bicycle frame as claimed in one of the preceding claims in dependence on claim 2, **characterized in that** the rear body (14) is integrally connected to the base frame (12).

10. The bicycle frame as claimed in one of the preceding claims, **characterized in that** at least one adjustment device is provided for adjusting the spring characteristics of the bicycle frame and / or for adjusting the damping characteristics.

11. The bicycle frame as claimed in claim 10, **characterized in that** the biasing and / or the spatial position of at least one elastic brace (26, 28) can be varied by means of the adjustment device.

12. The bicycle frame as claimed in one of the preceding claims in dependence on claim 5, **characterized in that** elastic additional elements are detachably arranged in the region of at least one elastically configured brace (26, 28) in such a way that by means of these elastic additional elements the spring rate of the spring acting on the wheel receptacle (30) can be changed.

13. The bicycle frame as claimed in one of the preceding claims, **characterized in that** the elastic additional elements are configured in a brace-like manner.

14. The bicycle frame as claimed in one of the preceding claims, **characterized in that** at least one damping device (46) is provided to dampen the movement of the wheel receptacle (30) which is spring mounted.

15. The bicycle frame as claimed in claim 14, **characterized in that** the damping device (46) engages in a chain brace (28) of the rear body (14).

16. The bicycle frame as claimed in claim 14 or 15, **characterized in that** the damping device (46) is arranged between a chain brace (28) of the rear body and a seat brace (26) of the rear body (14).

17. The bicycle frame as claimed in one of the preceding claims, **characterized in that** at least one damper (46) is arranged at least partially radially inside and axially outside a wheel (32) mounted on the bicycle frame (10).

18. The bicycle frame as claimed in one of the preceding claims, **characterized in that** a guiding device is provided for a guiding of the wheel receptacle (30) during the deflecting and / or the rebounding.

19. The bicycle frame as claimed in one of the preceding claims, **characterized in that** a plurality of elastically configured braces (26, 28) are provided, which, in particular in interaction, determine the movement path of the wheel receptacle (30) during the deflecting and / or the rebounding.

20. The bicycle frame as claimed in one of the preceding claims, **characterized in that** the wheel receptacle (30) is moved in such a way during the deflecting and / or the rebounding that the chain tension of a driving chain Is not affected by the deflecting and / or the rebounding.

21. The bicycle frame as claimed in one of the preceding claims, **characterized in that** the wheel receptacle (30) is moved to receive the rear wheel (32) during the deflecting and / or the rebounding, and that the axis of the rear wheel moves essentially on a section of a circular path, which extends around the axis of a bottom bracket housing (24) of the bicycle frame (10).

22. The bicycle frame as claimed in one of the preceding claims, **characterized in that** the elasticity is substantially effective in a plane, which is arranged parallel to the wheel plane.

23. The bicycle frame as claimed in one of the preceding claims, **characterized in that** the wheel receptacle (30) is arranged to be essentially non-movably perpendicular to the wheel plane.

24. The bicycle frame as claimed in one of the preceding claims, **characterized in that** the elastic brace (26, 28) comprises carbon fibers and / or fiberglass.

## Revendications

1. Cadre de bicyclette avec un cadre de base (12), dans lequel le cadre de base (12) présente au moins un tube inférieur (20) et un tube de selle (22), et au moins un dispositif (14, 60) agencé sur ce cadre de base (12) qui est conçu comme une construction à entretoises et présente une zone de réception (30) pour la réception d'une roue (32), dans lequel le dispositif (14, 60) présente deux entretoises (26, 28) élastiques et montées parallèlement qui sont agencées sur le même côté du plan de roue, dans lequel ces entretoises (26, 28) sont conçues élastiquement de sorte que la résistance à la flexion des entretoises (26, 28) conçues élastiquement autour d'un axe qui est agencé perpendiculairement au plan de bicyclette, est nettement plus petite qu'autour d'un axe qui se trouve sensiblement dans le plan de bicyclette de sorte que la zone de réception (30) est logée sur ressort, **caractérisé en ce qu'**au moins un élément supplémentaire fixant est agencé de manière amovible de sorte qu'en cas d'élément supplémentaire fixant monté, le logement de roue (30) n'est pas logé sensiblement sur ressort et en cas d'élément supplémentaire fixant non monté, le logement de roue (30) est logé sensiblement sur ressort.

2. Cadre de bicyclette selon la revendication 1, **caractérisé en ce que** le dispositif (14, 60) est une structure arrière de bicyclette (14).

3. Cadre de bicyclette selon la revendication 1, **caractérisé en ce que** le dispositif (14, 60) est une fourche de bicyclette (60).

4. Cadre de bicyclette selon la revendication 2, **caractérisé en ce que** la structure arrière (14) présente au moins une entretoise de chaîne (28) et au moins une entretoise de selle (26).

5. Cadre de bicyclette selon l'une des revendications précédentes, **caractérisé en ce qu'**au moins une entretoise (26, 28) conçue élastiquement agit comme ressort, à l'aide duquel un logement de roue (30), tel qu'un logement de roue avant ou logement de roue arrière (30), est logé sur ressort.

6. Cadre de bicyclette selon la revendication 5, **caractérisé en ce que** les entretoises (26, 28) sont conçues élastiquement de sorte que le logement de roue (30) peut être déplacé élastiquement en fonctionnement normal de la bicyclette ou en cas de sollicitations survenant généralement à cette occasion le long d'une course de ressort d'au moins 1 mm, de préférence d'au moins de 2 mm, de manière particulièrement préférée d'au moins 4 mm, de préférence d'au moins 5 mm, de manière préférée d'au moins 7 mm, de manière particulièrement préférée d'au moins 10 mm, de manière particulièrement préférée d'au moins 13 mm, de manière particulièrement préférée d'au moins 15 mm.

7. Cadre de bicyclette selon l'une des revendications précédentes, **caractérisé en ce qu'**une zone conçue élastiquement des entretoises conçues élastiquement (26, 28) est agencée radialement dans et axialement en dehors d'une roue (32) montée sur le cadre de bicyclette (10).

8. Cadre de bicyclette selon l'une des revendications précédentes en fonction de la revendication 2, **caractérisé en ce que** la structure arrière (14) est conçue d'un seul tenant.

9. Cadre de bicyclette selon l'une des revendications précédentes en fonction de la revendication 2, **caractérisé en ce que** la structure arrière (14) est reliée d'un seul tenant avec le cadre de base (12).

10. Cadre de bicyclette selon l'une des revendications précédentes, **caractérisé en ce qu'**au moins un dispositif de réglage est prévu pour le réglage des propriétés de ressort du cadre de bicyclette et/ou pour le réglage des propriétés d'amortisseur.

11. Cadre de bicyclette selon la revendication 10, **caractérisé en ce que** la précontrainte et/ou la position spatiale d'au moins une entretoise élastique (26, 28) est modifiable à l'aide du dispositif de réglage.

12. Cadre de bicyclette selon l'une des revendications précédentes en fonction de la revendication 5, **caractérisé en ce que** dans la zone d'au moins une entretoise conçue élastiquement (26, 28), des éléments supplémentaires élastiques sont agencés de manière amovible de sorte que la constante du ressort agissant sur la zone de réception de roue (30) peut être modifiée à l'aide de ces éléments supplémentaires élastiques.

13. Cadre de bicyclette selon la revendication 12, **caractérisé en ce que** les éléments supplémentaires élastiques sont conçus comme entretoises.

14. Cadre de bicyclette selon l'une des revendications précédentes, **caractérisé en ce qu'**au moins un dispositif amortisseur (46) est prévu afin d'amortir le mouvement du logement de roue (30) logé sur ressort.

15. Cadre de bicyclette selon la revendication 14, **caractérisé en ce que** le dispositif amortisseur (46) s'engage dans une entretoise de chaîne (28) de la structure arrière (14).

16. Cadre de bicyclette selon la revendication 14 ou 15, **caractérisé en ce que** le dispositif amortisseur (46) est agencé entre une entretoise de chaîne (28) de la structure arrière (14) et une entretoise de selle (26) de la structure arrière (14).

17. Cadre de bicyclette selon l'une des revendications précédentes, **caractérisé en ce qu'**au moins un amortisseur (46) est agencé au moins partiellement radialement dans et axialement en dehors d'une roue (32) montée sur le cadre de bicyclette (10).

18. Cadre de bicyclette selon l'une des revendications précédentes, **caractérisé en ce qu'**un dispositif de guidage est prévu pour le guidage du logement de roue (30) pendant la contraction et/ou l'extension du ressort.

19. Cadre de bicyclette selon l'une des revendications précédentes, **caractérisé en ce que** plusieurs entretoises (26, 28) conçues élastiquement sont prévues, lesquelles déterminent en particulier en coaction la voie de déplacement du logement de roue (30) pendant la contraction et/ou l'extension du ressort.

20. Cadre de bicyclette selon l'une des revendications précédentes, **caractérisé en ce que** le logement de roue (30) est déplacé pour la réception de la roue arrière (32) lors de la contraction et/ou l'extension du ressort de sorte que la tension de chaîne d'une chaîne d'entraînement ne soit pas sensiblement influencée par cette contraction et/ou extension du ressort.

21. Cadre de bicyclette selon l'une des revendications précédentes, **caractérisé en ce que** le logement de roue (30) est déplacé pour la réception de la roue arrière (32) lors de la contraction et/ou l'extension du ressort, **en ce que** l'essieu de roue arrière se déplace sensiblement sur une section d'une voie circulaire qui s'étend autour de l'axe d'un boîtier de pédalier (24) du cadre de bicyclette (10).

22. Cadre de bicyclette selon l'une des revendications précédentes, **caractérisé en ce que** l'élasticité est efficace sensiblement dans un plan qui est agencé parallèlement au plan de roue.

23. Cadre de bicyclette selon l'une des revendications précédentes, **caractérisé en ce que** le logement de roue (30) est agencé de manière sensiblement non mobile perpendiculairement au plan de roue.

24. Cadre de bicyclette selon l'une des revendications précédentes, **caractérisé en ce que** l'entretoise élastique (26, 28) présente des fibres de carbone et/ou des fibres de verre.
